# EUROPEAN PATENT APPLICATION

(11) **EP 4 693 147 A1**
(43) Date of publication of application: **11.02.2026**
(21) Application number: 24792993.8
(22) Date of filing: 17.04.2024
(51) Int. Cl.: G06Q 30/06, G09F 3/20, G06V 10/56, G06K 7/14, G06K 19/06, G06Q 10/08

(54) **METHOD AND SYSTEM FOR OBTAINING RELEVANT INFORMATION OF PRODUCT**

(30) Priority: 19.04.2023 KR 20230051530
(71) Applicant: SOLUM CO., LTD., Gyeonggi-do 16914 (KR)
(72) Inventor: LEE, Seo Jin, Yongin-si, Gyeonggi-do 16914 (KR)
(74) Representative: South, Nicholas Geoffrey
(86) International application number: PCT/KR2024/005131
(87) International publication number: WO 2024/219808

(57) **Abstract**

An embodiment provides a method for obtaining relevant information of a product, the method comprising the steps of: obtaining a captured image of at least one electronic shelf label, captured by an imaging device; identifying, from the captured image, at least one pattern code displayed on the at least one electronic shelf label; identifying, from the captured image, at least one LED included in the at least one electronic shelf label; and on the basis of a combination of the identified at least one pattern code and at least one LED, obtaining relevant information of at least one product, the information being assigned to the at least one electronic shelf label.

## Description

### [Technical Field]

The present disclosure relates to a method and system for obtaining product-related information.

### [Background Art]

Electronic labels are increasingly being used in applications such as displaying product information on store shelves. Electronic labels, also known as electronic shelf labels or electronic tags, connect to a server via a gateway, receive product information, and display the received information on an electronic paper display. The use of electronic labels is expanding due to their low-power operation, which allows for extended battery life, and the ability to change display information via a communication network, which reduces store management labor costs.

When a new product is placed on a shelf, a process of assigning an electronic label to display information on the product is required. Typically, a store manager uses a terminal to read the barcode attached to the electronic label, then reads the product barcode and transmits the same to a server. The server then assigns the electronic label to the product, registers the same in a database, and transmits the product information to the electronic label, processing the change in display.

However, as the number of products displayed on store shelves increases, it becomes highly inefficient for users to individually scan the barcodes of electronic shelf labels corresponding to multiple products with a terminal in store management. Therefore, research is needed to develop methods for efficiently assigning products to countless electronic shelf labels to increase store management efficiency and reduce costs.

Furthermore, when product-related user input is received through a user terminal, the operation of an electronic shelf label can be controlled based on a signal generated by the user input. In this case, if the control state of the electronic shelf label can be identified based on the user input, big data related to the user input can be obtained. This big data can be helpful in developing sales management and product sales strategies. Consequently, there is a growing demand for methods for efficiently identifying the control state of electronic shelf labels.

### [Disclosure]

### [Technical Problem]

Various embodiments of the present disclosure provide a method and system for obtaining product-related information, which can assign products to electronic shelf labels and obtain product-related information based on pattern codes displayed by the electronic shelf labels and/or LEDs included in the electronic shelf labels.

Various embodiments of the present disclosure provide a method and system for obtaining product-related information, which can obtain information on display states of products by utilizing location information of products assigned to electronic shelf labels obtained based on pattern codes displayed by the electronic shelf labels and/or LEDs included in the electronic shelf labels, and images from planograms.

### [Technical Solution]

One embodiment provides:
a method of obtaining product-related information, including obtaining a captured image of at least one electronic shelf label captured by an imaging device; identifying at least one pattern code displayed on the at least one electronic shelf label from the captured image; identifying at least one LED included in the at least one electronic shelf label from the captured image; and obtaining information related to at least one product assigned to the at least one electronic shelf label based on a combination of the identified at least one pattern code and the at least one LED.

In another aspect, the identifying at least one LED may include identifying a color emitted from the at least one LED.

In another aspect, the identifying information related to at least one product may include identifying a type of the at least one product matching the combination of the at least one pattern code and the color emitted from the at least one LED.

In another aspect, the obtaining information related to at least one product may include obtaining location data of the at least one product matching the at least one pattern code based on the identified pattern code, and obtaining information regarding a user input with respect to the at least one product located at a location specified by the location data, which matches the color emitted from the at least one LED based on the identified color.

In another aspect, the obtaining a captured image may include obtaining a plurality of captured images of the at least one electronic shelf label captured by the imaging device multiple times each time the at least one LED repeatedly emits light in response to signals according to a plurality of user inputs, the identifying at least one pattern code displayed on the at least one electronic shelf label may include identifying at least one pattern code displayed on the at least one electronic shelf label multiple times from the plurality of captured images, the identifying a color emitted from at least one LED included in the at least one electronic shelf label may include identifying the color emitted from the at least one LED multiple times from the plurality of captured images, and the obtaining information regarding a user input may include obtaining the information regarding the user input based on the number of times the color emitted from the at least one LED has been identified.

In another aspect, the method of obtaining product-related information may further include displaying the information regarding the user input on a display module.

In another aspect, the user input may be a user input for selecting the at least one product assigned to the at least one electronic shelf label.

In another aspect, the user input may be a user input for purchasing the at least one product assigned to the at least one electronic shelf label.

In another aspect, the obtaining information related to the at least one product may include obtaining information regarding a first user input with respect to the at least one product provided at a location specified by the location data, which matches a first color, in a case where the color emitted from the identified at least one LED is the first color, and obtaining information regarding a second user input with respect to the at least one product provided at the location specified by the location data, which matches a second color, in a case where the color emitted from the identified at least one LED is the second color.

In another aspect, the obtaining a captured image may include obtaining the captured image by the imaging device capturing an image of an area in which the at least one electronic shelf label and the at least one product assigned to the at least one electronic shelf label are provided.

In another aspect, the method of obtaining product-related information may further include obtaining location data of the at least one product based on the information related to the at least one product, detecting a target image, which is an image of an area corresponding to the location data of the at least one product, from the captured image, detecting a reference image, which is an image of an area corresponding to the location data of the at least one product, from a planogram, and comparing the target image with the reference image.

In another aspect, the method of obtaining product-related information may further include displaying information regarding a display state of the at least one product on a display module in a case where the target image is determined to be different from the reference image in the comparing the target image with the reference image.

In another aspect, the method of obtaining product-related information may further include receiving a user input with respect to the at least one product from a user.

In another aspect, the method of obtaining product-related information may further include controlling the at least one electronic shelf label such that an LED corresponding to the user input emits light.

In another aspect, the method of obtaining product-related information may further include controlling the at least one electronic shelf label such that the at least one electronic shelf label displays the at least one pattern code corresponding to the user input.

One embodiment provides
a system for obtaining product-related information, including at least one electronic shelf label including an LED, an imaging device, and a computing device including a processor configured to perform a method of obtaining information related to at least one product assigned to the at least one electronic shelf label based on a captured image of the at least one electronic shelf label captured by the imaging device.

### [Advantageous Effects]

According to various embodiments of the present disclosure, it is possible to provide a method and system for obtaining product-related information, which can more efficiently obtain information on countless products displayed on shelves in a store by assigning products to electronic shelf labels and obtaining product-related information based on pattern codes displayed by the electronic shelf labels and/or LEDs included in the electronic shelf labels.

According to various embodiments of the present disclosure, it is possible to provide a method and system for obtaining product-related information, which can obtain information on display states of products by utilizing location information of products assigned to electronic shelf labels obtained based on pattern codes displayed by the electronic shelf labels and/or LEDs included in the electronic shelf labels and images from planograms.

### [Description of Drawings]

FIG. 1 illustrates an exemplary configuration of a system for obtaining product-related information according to an embodiment.
FIG. 2 illustrates an exemplary configuration of an electronic shelf label according to an embodiment.
FIG. 3 is a block diagram illustrating an exemplary configuration of a server according to an embodiment.
FIG. 4 is a block diagram illustrating an exemplary configuration of a computing device according to an embodiment.
FIG. 5 is a flowchart illustrating a method of obtaining product-related information according to an embodiment.
FIG. 6 illustrates an exemplary captured image obtained by an imaging device capturing an area where electronic shelf labels and products are provided according to an embodiment.
FIG. 7 illustrates a method of assigning products to combinations of pattern codes and colors emitted from LEDs of electronic shelf labels according to an embodiment.
FIG. 8 illustrates a step of obtaining product-related information based on a combination of a pattern code and a color emitted from an LED according to an embodiment.
FIG. 9 is a flowchart illustrating a method of obtaining product-related information according to another embodiment.
FIG. 10 illustrates a step of obtaining product-related information based on a combination of a pattern code and a color emitted form an LED according to another embodiment.
FIG. 11 is a flowchart illustrating a method of obtaining product-related information according to another embodiment.
FIG. 12 illustrates an exemplary captured image obtained by an imaging device capturing an area where electronic shelf labels and products are provided according to another embodiment.
FIG. 13 illustrates an exemplary planogram according to an embodiment.
FIG. 14 illustrates a product misplacement alarm displayed on a computing device according to an embodiment.
FIG. 15 illustrates an exemplary captured image obtained by an imaging device capturing an area where electronic shelf labels and products are provided according to another embodiment.
FIG. 16 illustrates a product out-of-stock alarm displayed on a computing device according to an embodiment.

### [Mode for Invention]

The present disclosure is capable of various modifications and embodiments. Therefore, specific embodiments are illustrated in the drawings and described in detail in the detailed description. The effects and features of the present disclosure, as well as the methods for achieving the same, will become clearer with reference to the embodiments described in detail below together with the drawings. However, the present disclosure is not limited to the embodiments disclosed below and can be implemented in various forms. In the following embodiments, terms such as "first," and "second" are not used in a limiting sense but are used for the purpose of distinguishing one component from another. Furthermore, the singular expression includes plural expressions unless the context clearly indicates otherwise. Furthermore, terms such as "include" and "have" indicate the presence of a feature or component described in the specification, and do not preemptively exclude the possibility of one or more other features or components being added. Furthermore, the sizes of components in the drawings may be exaggerated or reduced for convenience of explanation. For example, the size and thickness of each component shown in the drawings are arbitrarily shown for convenience of explanation, and thus the present disclosure is not necessarily limited to what is shown.

Hereinafter, embodiments of the present disclosure will be described in detail with reference to the attached drawings. In describing with reference to the drawings, identical or corresponding components are given the same drawing reference numerals, and redundant descriptions thereof will be omitted.

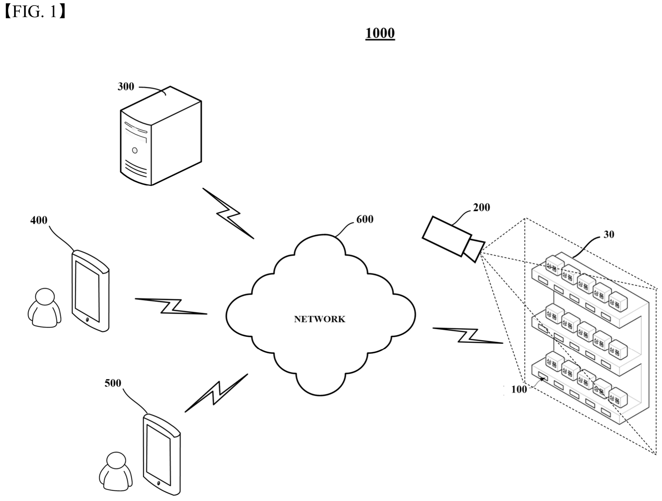

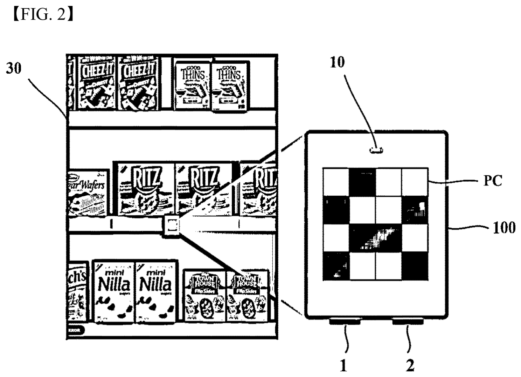

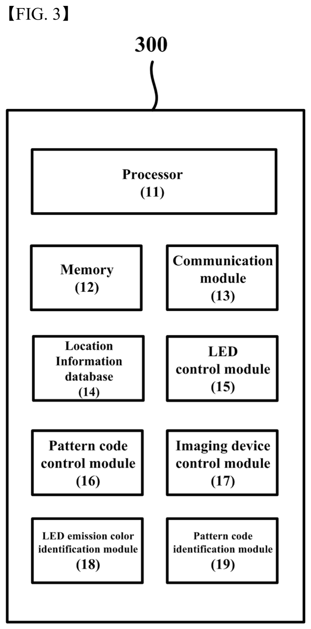

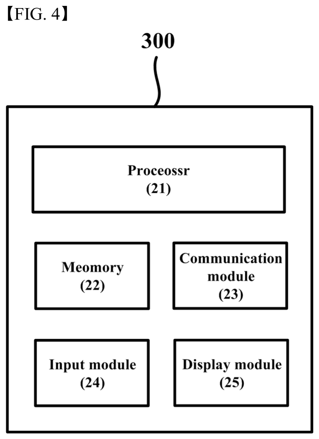

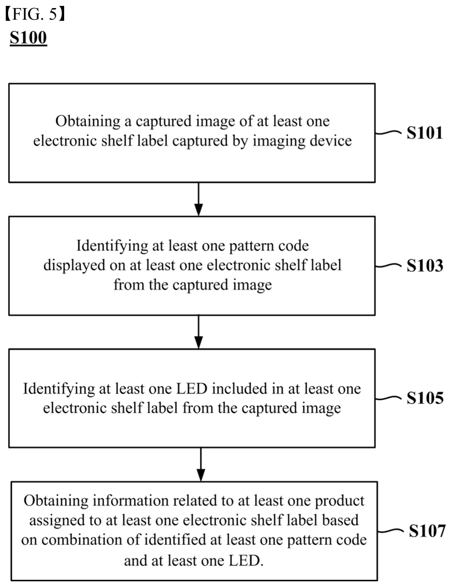

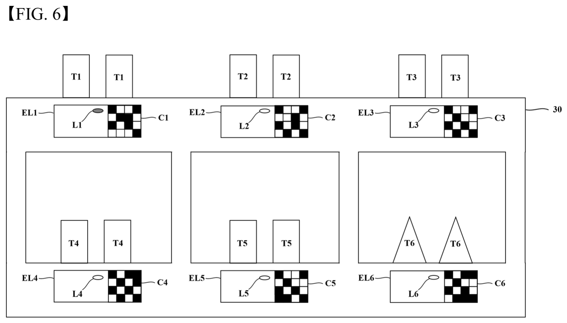

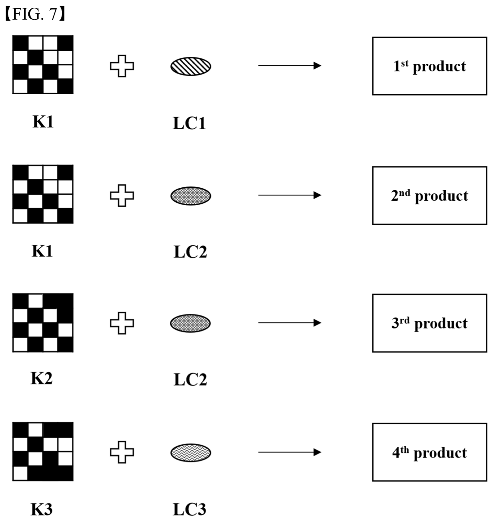

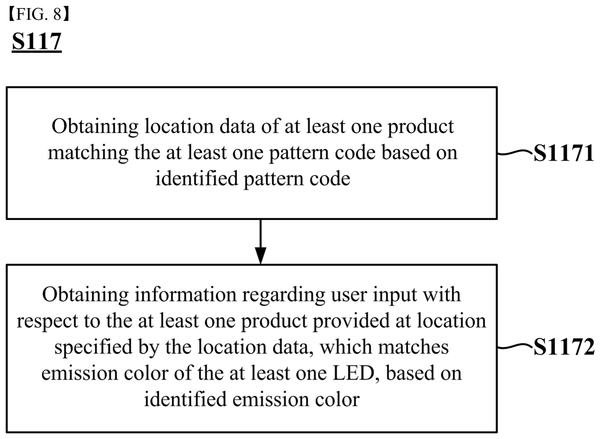

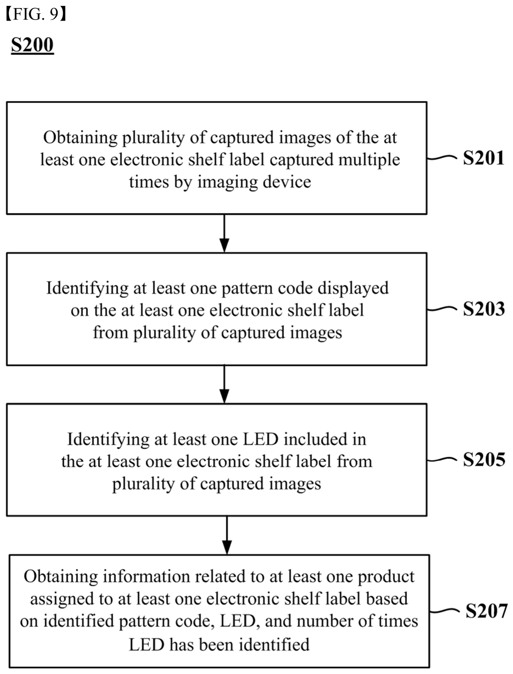

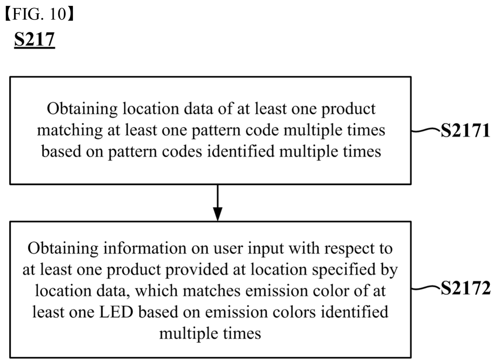

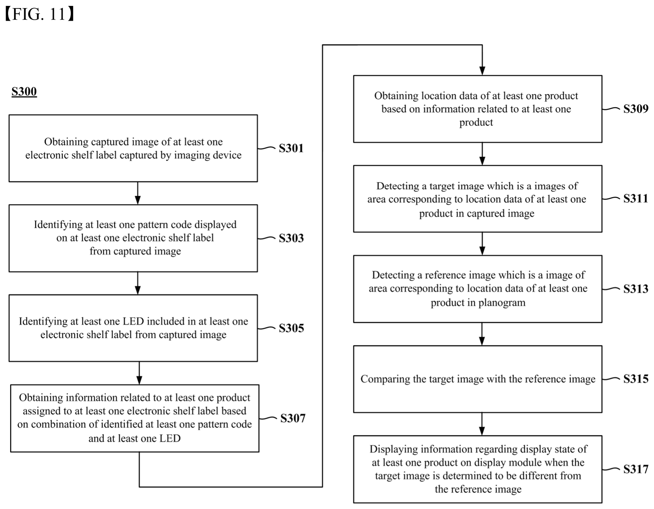

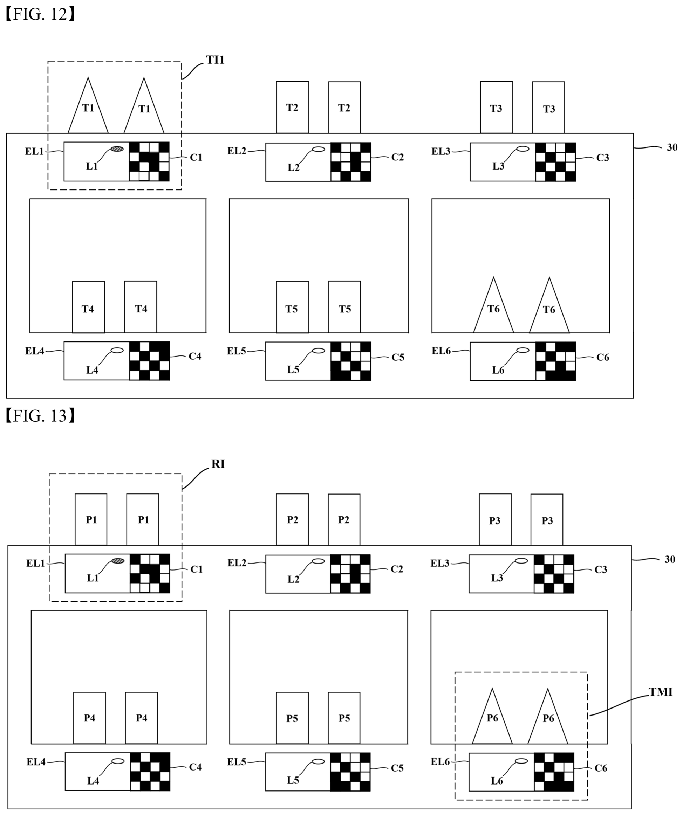

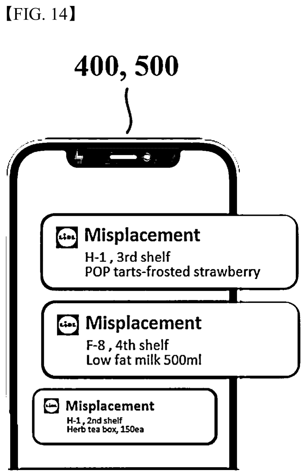

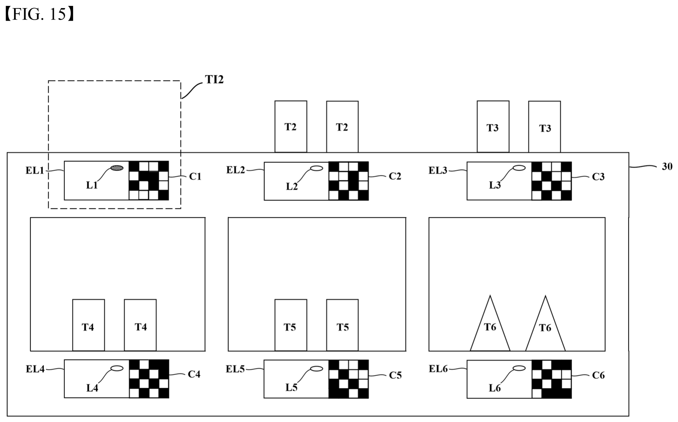

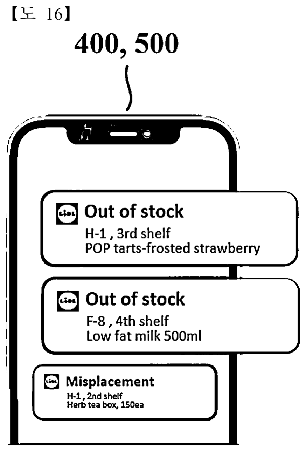

FIG. 1 illustrates an exemplary configuration of a system 1000 for obtaining product-related information according to an embodiment. FIG. 2 illustrates an exemplary configuration of an electronic shelf label 100 according to an embodiment. FIG. 3 is a block diagram illustrating an exemplary configuration of a server 300 according to an embodiment. FIG. 4 is a block diagram illustrating an exemplary configuration of a computing device 300, 400 according to an embodiment. FIG. 5 is a flowchart illustrating a method S100 of obtaining product-related information according to an embodiment. FIG. 6 illustrates an exemplary captured image obtained by an imaging device 200 capturing an area where electronic shelf labels and products are provided according to an embodiment. FIG. 7 illustrates a method of assigning products to combinations of pattern codes P1, P2, and P3 and colors LC1, LC2, and LC3 emitted from LEDs of electronic shelf labels according to an embodiment. FIG. 8 illustrates a step S117 of obtaining product-related information based on a combination of a pattern code and a color emitted from an LED according to an embodiment. FIG. 9 is a flowchart illustrating a method S200 of obtaining product-related information according to another embodiment. FIG. 10 illustrates a step S217 of obtaining product-related information based on a combination of a pattern code and a color emitted form an LED according to another embodiment. FIG. 11 is a flowchart illustrating a method S300 of obtaining product-related information according to another embodiment. FIG. 12 illustrates an exemplary captured image obtained by an imaging device 200 capturing an area where electronic shelf labels and products are provided according to another embodiment. FIG. 13 illustrates an exemplary planogram according to an embodiment. FIG. 14 illustrates a product misplacement alarm displayed on a computing device 400 or 500 according to an embodiment. FIG. 15 illustrates an exemplary captured image obtained by an imaging device 200 capturing an area where electronic shelf labels and products are provided according to another embodiment. FIG. 16 illustrates a product out-of-stock alarm displayed on a computing device 400 or 500 according to an embodiment.

Referring to FIG. 1, a system 1000 for obtaining product-related information according to an embodiment may include at least one electronic shelf label 100, an imaging device 200, a server 300, and computing devices 400 and 500. The computing devices 400 and 500 may be portable user terminals. The system 1000 may provide an environment in which information related to at least one product assigned to at least one electronic shelf label 100 can be acquired based on a combination of a pattern code displayed by the at least one electronic shelf label 100 and an LED included in the at least one electronic shelf label 100.

The at least one electronic shelf label 100, the imaging device 200, the server 300, and the computing devices 400 and 500 may be connected via a network 600. Here, the network 600 according to the embodiment may refer to a connection architecture that enables information exchange between nodes, such as the at least one electronic shelf label 100, the imaging device 200, the server 300, and the computing devices 400 and 500.

For example, the network 600 may include a 3rd Generation Partnership Project (3GPP) network, a Long Term Evolution (LTE) network, a World Interoperability for Microwave Access (WIMAX) network, the Internet, a Local Area Network (LAN), a wireless LAN, a Wide Area Network (WAN), a Personal Area Network (PAN), a Bluetooth network, a satellite broadcasting network, an analog broadcasting network, a Digital Multimedia Broadcasting (EMB) network, and the like, but the present disclosure is not limited thereto.

At least one electronic shelf label 100 may be wirelessly connected to the server 300 via a separate gateway (not shown). However, the present disclosure is not limited thereto, and the at least one electronic shelf label 100 may be connected to the computing devices 400 and 500 via wireless communication. For example, the at least one electronic shelf label 100 may be paired with a computing device 400 or 500 based on Bluetooth.

Hereinafter, the at least one electronic shelf label 100, the imaging device 200, the server 300, and the computing devices 400 and 500 included in the system 1000 will be described in detail with reference to the attached drawings.

### - At least one electronic shelf label 100

At least one electronic shelf label 100 may be an electronic device mounted on a shelf 30 and displaying information related to at least one product displayed on the shelf 30. For example, the at least one electronic shelf label 100 may display product-related information, such as a Korean product name, an English product name, country of origin, product price, raw materials, and weight/calories.

The at least one electronic shelf label 100 may include a display module that displays product-related information on the front and a communication module capable of communicating with the server 300 and the computing devices 400 and 500. Furthermore, the at least one electronic shelf label 100 may be equipped with any components and programs capable of Bluetooth communication.

The display module included in the at least one electronic shelf label 100 may include an electronic paper display (EPD), which maintains a product information display state even when power is cut off. The electronic paper display is suitable for at least one electronic shelf label 100 that requires reduced power consumption due to the bistability thereof, which allows the electronic shelf label to maintain the display state for a long period of time even when power is cut off. Known electronic paper displays include a twist ball type using hemispherical twist balls charged with electrostatic charge, an electrophoretic display using electrophoresis and microcapsules, and a cholesterol liquid crystal display using cholesterol liquid crystals.

However, the present disclosure is not limited thereto, and the display module included in the at least one electronic shelf label 100 may include any one of a liquid crystal display (LCD), a thin film transistor-liquid crystal display (TFT LCD), an organic light-emitting diode (OLED), a flexible display, and a three-dimensional display (3D display).

Referring to FIG. 2, the at least one electronic shelf label 100 provided on the shelf 30 may include a display module that displays product-related information provided in one area of the outer surface thereof and an LED 10 provided in another area. Here, the LED 10 is an abbreviation for "light emitting device" and may be a light-emitting device included in the electronic shelf label 100. The display module of the electronic shelf label 100 may display a pattern code PC based on a signal from the server 300 or the computing device 400 or 500. Here, the pattern code PC may be a 2D code. For example, the pattern code PC may be a 4×4 2D code, and each of a plurality of pixels included in the pattern code PC may be displayed in black or white. Accordingly, the pattern code PC may be displayed in 65,536 (=2¹⁶) different forms.

Furthermore, the at least one electronic shelf label 100 may include one or more buttons 1 and 2. For example, the at least one electronic shelf label 100 may include a first button 1 and a second button 2. The first button 1 and the second button 2 may be provided on a portion of the outer surface of the at least one electronic shelf label 100.

The LED 10 may be controlled based on a signal from the server 300 or the computing device 400 or 500. Furthermore, the LED 10 may emit various colors. For example, the LED 10 may emit seven colors of blue, red, green, yellow, sky blue, gray, and white. However, the present disclosure is not limited thereto, and the LED 10 may further emit various colors other than the seven colors listed above.

A pairing signal may be transmitted from the at least one electronic shelf label 100 to the computing device 400 or 500 based on user input via the first button 1 and/or the second button 2. Accordingly, the at least one electronic shelf label 100 may be paired with the computing device 400 or 500 based on Bluetooth. For example, when a user presses the first button 1 and/or the second button 2, a pairing signal is transmitted from the at least one electronic shelf label 100 to the computing device 400 or 500, and thus the at least one electronic shelf label 100 may be paired with the computing device 400 or 500 based on the Bluetooth function.

### - Imaging device 200

The imaging device 200 may be installed around the shelf 30 and controlled to capture an image of an area on the shelf 30 where at least one electronic shelf label 100 and at least one product are provided. The imaging device 200 may be installed movably around the shelf 30 and controlled to periodically capture images of at least one electronic shelf label 100 and at least one product on the shelf 30.

In a state in which a plurality of shelves 30 is arranged, the imaging device 200 may be installed on a first shelf among the plurality of shelves 30, and the imaging device 200 may be configured to capture images of at least one electronic shelf label 100 and at least one product on a second shelf facing the first shelf.

For example, a plurality of different types of products may be displayed on a shelf 30, and a plurality of electronic shelf labels 100 may be provided on the shelf 30 to correspond to the positions at which the plurality of products is provided. In this case, information related to each of the different types of products may be assigned to each of the plurality of electronic shelf labels 100 provided at the positions corresponding to the plurality of products. The imaging device 200 may capture an image of the plurality of products and the plurality of electronic shelf labels 100 provided on the shelf 30 to obtain a captured image. Accordingly, the captured image may include the plurality of products and the plurality of electronic shelf labels 100 provided to correspond to the plurality of products.

### - Server 300

The server 300 may perform a series of processes to provide an environment necessary for the system 1000 to perform a method of obtaining information related to at least one product assigned to at least one electronic shelf label 100 based on a pattern code displayed by the at least one electronic shelf label 100 and an LED 10 included in the at least one electronic shelf label 100.

Specifically, in an embodiment, the server 300 may exchange necessary data with at least one electronic shelf label 100, the imaging device 200, and the computing devices 400 and 500 to enable the method of obtaining information related to at least one product assigned to the at least one electronic shelf label 100 based on a combination of a pattern code displayed by the at least one electronic shelf label 100 and an LED 10 included in the at least one electronic shelf label 100. Accordingly, the server 300 can provide an environment necessary to perform the method of obtaining product-related information.

For example, the server 300 may provide an environment in which a product-related information acquisition application can operate in the computing devices 400 and 500 (e.g., portable user terminal type computing devices, desktop-type computing devices, and/or fixed kiosk-type computing devices). The server 300 may include application programs, data, and/or instructions for the product-related information acquisition application to operate, and may transmit data based thereon to the computing devices 400 and 500.

Furthermore, the server 300 may provide a license key to the computing devices 400 and 500. The server 300 may provide a license key that grants the computing devices 400 and 500 the authority to receive data regarding results of obtaining product-related information. For example, store customers can receive a service to obtain product-related information by using the computing devices 400 and 500 that have received a license key.

Referring to FIG. 3, the server 300 may be implemented as a predetermined computing device including at least one processor 11 for data processing, a memory 2 in which application programs, data and/or instructions are stored, at least one communication module 13 for data exchange with external devices, a location information database 14 in which location information of at least one electronic shelf label 100 is stored), an LED control module 15 for controlling the operation of an LED 10 included in at least one electronic shelf label 100, a pattern code control module 16 for controlling at least one electronic shelf label 100 to display at least one pattern code, an imaging device control module 17 for controlling the operation of the imaging device 200, an LED identification module 18 for identifying the LED 10 included in at least one electronic shelf label 100, and a pattern code identification module 19 for identifying at least one pattern code displayed by at least one electronic shelf label 100.

The processor 11 may control the overall operation of components included in the server 300 to provide an environment in which a product-related information acquisition application can operate in the computing devices 400 and 500.

The processor 11 may be a system-on-chip (SOC) including a central processing unit (CPU) and/or a graphics processing unit (GPU), and may execute an operating system (OS) and/or application programs stored in the memory 12.

In addition, the processor 11 may internally communicate with each component included in the server 300 via a system bus, and may include one or more predetermined bus structures, including a local bus.

In addition, the processor 11 may be implemented using at least one of application specific integrated circuits (ASICs), digital signal processors (DSPs), digital signal processing devices (DSPDs), programmable logic devices (PLDs), field programmable gate arrays (FPGAs), controllers, microcontrollers, microprocessors, and other electrical units for performing functions.

The memory 12 may store one or more of an operating system (OS), various application programs, data, and instructions for providing an environment necessary for performing a method of obtaining product-related information.

Additionally, the memory 12 may include a program area and a data area. Here, the program area according to the embodiment may be linked between the operating system (OS) that boots the server 300 and functional elements, and the data area may store data generated as the server 300 is used.

In an embodiment, the memory 12 may be various storage devices such as a ROM, a RAM, an EPROM, a flash drive, and a hard drive, and may also be web storage that performs a storage function on the Internet. Furthermore, the memory 12 may be a removable storage medium on the server.

The communication module 13 may include various types of communication devices that enable the server 300 to transmit/receive data to/from external devices. The server 300 may transmit data based on application programs, data, and/or instructions for the operation of the product-related information acquisition application to the computing devices 400 and 500 via the communication module 13.

The location information database 14 may store location information of at least one electronic shelf label 100. For example, a plurality of electronic shelf labels 100 corresponding to a plurality of products may be provided on a shelf 30. Such electronic shelf labels 100 may be placed at specific locations on the shelf 30, and specific location information on the electronic shelf labels 100 with respect to the shelf 30 may be stored in the location information database 14.

For example, a first electronic shelf label among the electronic shelf labels 100 may be provided on the second row and the third column of the first shelf provided in zone A among a plurality of zones. In this case, location information on the first electronic shelf label, "second row and third column of the first shelf in zone A," may be stored in the location information database 14 as location information on the first electronic shelf label in association with a unique identification number of the first electronic shelf label.

The LED control module 15 may control the operation of the LED 10 of at least one electronic shelf label 100 based on a signal from the computing device 400 or 500. For example, the computing device 400 or 500 can receive a first user input for selecting any first product, and a signal according to the first user input can be transmitted from the computing device 400 or 500 to the server 300. The signal according to the first user input received by the server 300 can be transmitted from the LED control module 15 to the electronic shelf label 100 to which the first product is assigned. The LED 10 of the electronic shelf label 100 that receives the signal from the LED control module 15 of the server 300 can emit light.

In addition, for example, the computing device 400 or 500 may receive a second user input for purchasing any first product, and a signal according to the second user input may be transmitted from the computing device 400 or 500 to the server 300. The signal according to the second user input received by the server 300 may be transmitted from the LED control module 15 to the electronic shelf label 100 to which the second product is assigned. The LED 10 of the electronic shelf label 100 that receives the signal from the LED control module 15 of the server 300 may emit light.

The pattern code control module 16 may control at least one electronic shelf label 100 to display at least one pattern code based on a signal from the computing device 400 or 500. For example, the computing device 400 or 500 may receive a first user input for selecting any first product, and a signal according to the first user input may be transmitted from the computing device 400 or 500 to the server 300. The signal according to the first user input received by the server 300 may be transmitted from the pattern code control module 16 to the electronic shelf label 100 to which the first product is assigned. The electronic shelf label 100 that receives the signal from the pattern code control module 16 of the server 300 may display a pattern code.

Further, for example, the computing device 400 or 500 may receive a second user input for purchasing any first product, and a signal according to the second user input may be transmitted from the computing device 400 or 500 to the server 300. The signal according to the second user input received by the server 300 may be transmitted from the pattern code control module 16 to the electronic shelf label 100 to which the second product is assigned. The electronic shelf label 100 that receives the signal from the pattern code control module 16 of the server 300 may display a pattern code.

The imaging device control module 17 may control the imaging device 200 to capture an image of an area around the shelf 30 where at least one electronic shelf label 100 and at least one product are provided on the shelf 30.

For example, the imaging device control module 17 may control the imaging device 200 installed to be movable around a shelf 30 to periodically capture images of at least one electronic shelf label 100 and at least one product on the shelf 30.

Furthermore, for example, the imaging device control module 17 may control the imaging device 200 installed around a shelf 30 to continuously capture images of at least one electronic shelf label 100 and at least one product on the shelf 30.

Furthermore, for example, the imaging device control module 17 may control the imaging device 200 to capture an image of an area provided with at least one electronic shelf label 100 that has received a signal from the LED control module 15 and/or a signal from the pattern code control module 16. In this way, the imaging device control module 17 can control the imaging device 200 to selectively capture an image of at least one electronic shelf label 100 that has received a signal from the LED control module 15 and/or a signal from the pattern code control module 16 among a plurality of electronic shelf labels 100.

The LED identification module 18 may identify the LED 10 included in at least one electronic shelf label 100. For example, the LED emission color identification module 18 may identify the color emitted from the LED 10 included in at least one electronic shelf label 100.

The LED 10 may be controlled to emit various colors based on signals from the server 300 or the computing devices 400 and 500. The LED identification module 18 may identify various colors emitted from the LED 10 from an image captured by the imaging device 200 using a color extraction algorithm.

For example, the imaging device 200 may transmit data of a capture image of at least one electronic shelf label 100 to the server 300. The LED identification module 18 may identify the color emitted from the LED 10 of the at least one electronic shelf label 100 included in the captured image based on the data of the captured image transmitted from the imaging device 200.

In addition, the LED identification module 18 may identify an emission pattern of the LED 10 included in the at least one electronic shelf label 100. Here, the emission pattern of the LED 10 may be an operation pattern of the LED 10 that combines an emission time, a pause time, etc.

The LED 10 may be controlled to emit light in various emission patterns based on a signal from the server 300 or the computing device 400 or 500. The LED identification module 18 may identify various emission patterns of the LED 10 from an image captured by the imaging device 200 using a pattern extraction algorithm. The pattern code identification module 19 may identify a pattern code displayed by at least one electronic shelf label 100. The at least one electronic shelf label 100 may be controlled to display various types of pattern codes based on a signal from the server 300 or the computing device 400 or 500. The pattern code identification module 19 may identify various types of pattern codes displayed by at least one electronic shelf label 100 using an image analysis algorithm.

For example, the imaging device 200 may transmit data of a captured image of at least one electronic shelf label 100 to the server 300. The pattern code identification module 19 may identify a pattern code displayed by the at least one electronic shelf label 100 included in the captured image based on the data of the captured image transmitted from the imaging device 200.

Although the server 300 according to an embodiment performs the functional operations described above in the above description, at least some functional operations performed by the server 300 may be performed by an external device (e.g., the computing devices 400 and 500), or at least some functional operations performed by the external device may be further performed by the server 300 according to various embodiments.

### - Computing devices 400 and 500

The computing devices 400 and 500 may be devices having a product-related information acquisition application installed therein. The computing devices 400 and 500 may include portable user terminals. The computing devices 400 and 500 may be divided into a first computing device 400 and a second computing device 500 depending on the user.

For example, the user of the first computing device 400 may be a store employee, and the user of the second computing device 500 may be a store customer. The first computing device 400 and the second computing device 500 may have substantially the same structure.

The computing devices 400 and 500 may be implemented as, for example, computers or portable terminals that can connect to the server 300 via a network. Here, computers may include, for example, a notebook, a desktop, and a laptop equipped with a WEB browser, a VR HMD (for example, HTC VIVE, Oculus Rift, GearVR, DayDream, PSVR, etc.), etc. Here, the VR HMD includes all of VR HMD for PC (for example, HTC VIVE, Oculus Rift, FOVE, Deepon, etc.), models for mobile (for example, GearVR, DayDream, Storm Magic, Google Cardboard, etc.), models for console (PSVR), and stand-alone models implemented independently (for example, Deepon, PICO, etc.). Portable terminals are, for example, wireless communication devices that ensures portability and mobility, and may include not only smartphones, tablets, and wearable devices, but also various devices equipped with communication modules such as Bluetooth (BLE, Bluetooth Low Energy), NFC, RFID, ultrasonic, infrared, Wi-Fi, and LiFi.

Referring to FIG. 4, the computing devices 400 and 500 may include at least one processor 21, a memory 22, a communication module 23, an input module 24, and a display module 25. Various components included in the computing devices 400 and 500 may be designed to be included within the housings of the computing devices 400 and 500.

In an embodiment, the processor 21 may control the overall operation of the components included in the computing devices 400 and 500 through a product-related information acquisition application stored in the memory 22 to provide an environment in which product-related information can be obtained based on a pattern code displayed by at least one electronic shelf label 100 and/or the LED 10 included in the at least one electronic shelf label 100.

For example, the processor 21 can control the operations of the communication module 23 and the input module 24 such that a signal according to a user input received through the input module 24 can be transmitted to the server 300 through the communication module 23.

The processor 21 may include a central processing unit (CPU) and/or a graphics processing unit (GPU). In addition, the processor 21 may include at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

The memory 22 can store commands and data that can be used to create a product-related information acquisition environment. A product-related information acquisition application may be stored in the memory 22. The product-related information acquisition application can provide various user interfaces for providing a product-related information acquisition environment.

The memory 22 may include one or more non-transitory computer-readable storage media and transitory computer-readable storage media. For example, the memory 22 may include various storage devices such as a ROM, an EPROM, a flash drive, and a hard drive. Furthermore, the memory 22 may include web storage that performs data storage functions over the Internet.

The communication module 23 may include various communication devices that enable data transmission/reception to/from external devices. For example, the communication module 23 may transmit/receive data to/from at least one electronic shelf label 100 and/or the server 300 via a wireless network.

The communication module 23 may wirelessly transmit/receive data to/from at least one of a base station, an external terminal, or an arbitrary server over a mobile communication network constructed using a communication device capable of performing technical standards or communication methods for mobile communication (e.g., Long Term Evolution (LTE), Long Term Evolution-Advanced (LTE-A), 5G NR (New Radio), and Wi-Fi) or short-range communication.

Furthermore, the communication module 23 may be configured to transmit/receive data to/from an external electronic device via Bluetooth. For example, the communication module 23 may receive a pairing signal from at least one electronic shelf label 100 and pair with the at least one electronic shelf label 100 via Bluetooth.

The input module 24 may be configured to receive various types of user input from users using the computing devices 400 and 500. For example, the input module 24 may include a touch screen that receives touch input from a user. If the input module 24 is implemented as a touch screen, the input module 24 may be formed integrally with the display module 25. However, the present disclosure is not limited thereto, and the input module 24 may further include a keyboard capable of receiving user input in the form of characters.

The display module 25 may display the product-related information acquisition application stored in the memory 22. For example, the display module 25 may include a display device that displays various types of user interface (UI) images for providing an environment for obtaining product-related information.

The display module 25 may include any one of a liquid crystal display (LCD), a thin film transistor-liquid crystal display (TFT LCD), an organic light-emitting diode (OLED), a flexible display, and a 3D display.

### - Methods of obtaining product-related information S100, S200, and S300

Hereinafter, methods of obtaining product-related information through a product-related information acquisition application executed by at least one processor 21 of the computing devices 400 and 500 according to various embodiments will be described in detail with reference to FIG. 5 to FIG. 16.

In various embodiments, at least one processor 21 of the computing devices 400 and 500 may execute the product-related information acquisition application stored in the memory 22 or operate the same in the background.

Although at least one processor 21 of the computing devices 400 and 500 operates to execute instructions of the product-related information acquisition application to perform a method of providing an environment necessary for performing the above-described methods of obtaining product-related information, the product-related information acquisition application performs the methods instead of the at least one processor 21 of the computing devices 400 and 500 in the following description for convenience of explanation.

FIG. 5 is a flowchart illustrating a method S100 of obtaining product-related information according to an embodiment.

Referring to FIG. 5, the method S100 of obtaining product-related information may include step S101 of obtaining a captured image of at least one electronic shelf label 100 captured by the imaging device 200, step S103 of identifying at least one pattern code displayed on the at least one electronic shelf label 100 from the captured image, step S105 of identifying at least one LED 10 included in the at least one electronic shelf label 100 from the captured image, and step S107 of obtaining information related to at least one product assigned to the at least one electronic shelf label 100 based on a combination of the identified at least one pattern code and at least one LED 10.

In step S101 of obtaining a captured image, the processor 11 of the server 300 may control the imaging device 200 to capture an image of an area on a shelf 30 where at least one electronic shelf label 100 and at least one product are provided, thereby acquiring a captured image.

For example, referring to FIG. 6, a captured image may include a plurality of electronic shelf labels EL1, EL2, EL3, EL4, EL5, and EL6 provided on the shelf 30 and a plurality of products T1, T2, T3, T4, T5, and T6 provided to correspond to the plurality of electronic shelf labels EL1, EL2, EL3, EL4, EL5, and EL6.

However, the present disclosure is not limited thereto, and the captured image may include some of the plurality of electronic shelf labels EL1, EL2, EL3, EL4, EL5, and EL6 provided on the shelf 30 and the plurality of products T1, T2, T3, T4, T5, and T6 provided to correspond to the plurality of electronic shelf labels EL1, EL2, EL3, EL4, EL5, and EL6.

For example, the captured image may include the first electronic shelf label EL1, the second electronic shelf label EL2, and the third electronic shelf label EL3 among the plurality of electronic shelf labels EL1, EL2, EL3, EL4, EL5, and EL6, and may include the first product T1, the second product T2, and the third product T3 among the plurality of products T1, T2, T3, T4, T5, and T6.

The imaging device 200 may transmit the acquired captured image to the server 300 and/or the computing devices 400 and 500 via the network 600.

In step S103 of identifying at least one pattern code displayed on the at least one electronic shelf label 100, the pattern code identification module 19 of the server 300 may identify the type of at least one pattern code displayed on the at least one electronic shelf label 100 included in the captured image.

The pattern code identification module 19 may identify at least one pattern code displayed on the at least one electronic shelf label 100 from the captured image through image analysis. Here, the at least one pattern code may be a 2D code.

Referring to FIG. 6, the captured image may include a plurality of pattern codes C1, C2, C3, C4, C5, and C6 displayed by the plurality of electronic shelf labels EL1, EL2, EL3, EL4, EL5, and EL6. The pattern code identification module 19 may identify at least some of the pattern codes C1, C2, C3, C4, C5, and C6 included in the captured image.

However, the present disclosure is not limited thereto, and the at least one processor 21 of the computing devices 400 and 500 may perform the step of identifying at least some of the pattern codes C1, C2, C3, C4, C5, and C6.

In step S105 of identifying at least one LED 10 included in the at least one electronic shelf label 100, the LED identification module 18 of the server 300 may identify the at least one LED 10 of the at least one electronic shelf label 100 included in the captured image.

For example, in step S105, the LED identification module 18 may identify the color emitted from the at least one LED 10 included in the at least one electronic shelf label 100 from the captured image using a color extraction algorithm. The at least one LED 10 may emit various colors. For example, the at least one LED 10 may emit seven colors of blue, red, green, yellow, sky blue, gray, and white. However, the present disclosure is not limited thereto, and the LED 10 may further emit various colors other than the seven colors listed above. Referring to FIG. 6, the captured image may include a plurality of LEDs L1, L2, L3, L4, L5, and L6 included in the plurality of electronic shelf labels EL1, EL2, EL3, EL4, EL5, and EL6. The LED identification module 18 may identify the colors emitted from at least some of the plurality of LEDs L1, L2, L3, L4, L5, and L6 included in the captured image.

For example, the LED identification module 18 may identify the colors emitted from some LEDs operating to emit light among the plurality of LEDs L1, L2, L3, L4, L5, and L6 included in the captured image.

However, the present disclosure is not limited thereto, and the at least one processor 21 of the computing devices 400 and 500 may perform the step of identifying the colors emitted from at least some of the plurality of LEDs L1, L2, L3, L4, L5, and L6.

Furthermore, for example, the LED identification module 18 may identify the emission pattern of the at least one LED 10 included in the at least one electronic shelf label 100 in step S105. The LED identification module 18 may identify various emission patterns of the at least one LED 10 from the captured image captured by the imaging device 200 using a pattern extraction algorithm.

The result of pattern code identification by the pattern code identification module 19 in step S103 and the result of LED identification by the LED identification module 18 in step S105 may be stored in the memory 12.

In this case, the pattern code identification result for the same electronic shelf label 100 and the result of identification of the at least one LED 10 may be matched and stored in the memory 12. For example, the first pattern code C1 displayed by the first electronic shelf label EL1 and the result (emission color or emission pattern) of identification of the first LED L1 included in the first electronic shelf label EL1 may be matched and stored in the memory 12.

In step S107 of obtaining product-related information, the processor 11 of the server 300 may obtain information related to at least one product assigned to the at least one electronic shelf label 100 based on a combination of at least one pattern code identified in the step S103 and at least one LED 10 identified in the step S105.

For example, the processor 11 may identify the type of at least one product assigned to the at least one electronic shelf label 100 based on the combination of at least one pattern code identified in step S103 and at least one LED 10 identified in step S105.

Specifically, the processor 11 may identify the type of at least one product matching the combination of at least one identified pattern code and the emission color of at least one identified LED 10.

In a product information database (not shown), information regarding the type of a product may be stored by matching any combination of at least one pattern code and any emitting color of at least one LED. The product information database may be included in the server 300 or implemented as a separate device from the server 300.

For example, referring to FIG. 7, the type of a first product may be matched to a combination of a first pattern code K1 and a first color LC1 and stored in the product information database. Additionally, the type of a second product may be matched to a combination of the first pattern code K1 and a second color LC2 and stored in the product information database. Even if the pattern codes of two different combinations are identical, if the emission colors of the LEDs in the combinations are different, information regarding the types of two different products may be matched to the two different combinations and stored in the product information database.

For example, referring to FIG. 7, the type of the second product may be matched to a combination of the first pattern code K1 and the second color LC2 and stored in the product information database. Furthermore, the type of a third product may be matched to a combination of a second pattern code K2 and the second color LC2 and stored in the product information database. Even if the LED emission colors of two different combinations are identical, if the pattern codes in the two different combinations are different, information regarding the types of two different products may be matched to the two different combinations and stored in the product information database.

For example, referring to FIG. 7, the type of the third product may be matched to a combination of the second pattern code K2 and the second color LC2 and stored in the product information database. Furthermore, the type of a fourth product may be matched to a combination of a third pattern code K3 and a third color LC3 and stored in the product information database. In this way, information regarding two different product types may be matched to two different combinations of pattern codes and LED emission colors and stored in the product information database.

In this way, information regarding different product types may be matched to combinations in which pattern codes and/or emission colors of the LED 10 are different and stored in the product information database. For example, if the pattern code is a 4×4 2D code and the LED 10 emits seven different colors, information regarding different product types can be matched to 458,752 (= 65,536×7) combinations.

The processor 11 may obtain information on the type of at least one product corresponding to the combination of the identification results of steps S103 and S105 by comparing the combination of the identification results of steps S103 and S105 with a combination of at least one pattern code and at least one emission color of the LED 10 from the product information database.

For example, if the pattern code of the first electronic shelf label EL1 included in the captured image is identified as the first pattern code K1 and the emission color of the first LED L1 included in the first electronic shelf label EL1 is identified as the first color LC1 through steps S103 and S105, the processor 11 can identify the type of the first product corresponding to the combination of the first pattern code K1 and the first color LC1.

In this way, the processor 11 can identify the type of the first product assigned to the first electronic shelf label EL1 based on the results of identification of the pattern code of the first electronic shelf label EL1 and the emission color of the first LED L1 included in the first electronic shelf label EL1.

Additionally, for example, if the pattern code of the second electronic shelf label EL2 included in the captured image is identified as the first pattern code K1 and the emission color of the second LED L2 included in the second electronic shelf label EL2 is identified as the first color LC2 through steps S103 and S105, the processor 11 can identify the type of the second product corresponding to the combination of the first pattern code K1 and the second color LC2.

In this way, the processor 11 can identify the type of the second product assigned to the second electronic shelf label EL2 based on the results of identification of the pattern code of the second electronic shelf label EL2 and the emission color of the second LED L2 included in the second electronic shelf label EL2.

As described above, various product types can be identified based on combinations of identified pattern codes and emission colors of the LED 10. For example, 458,752 (=65,536×7) product types corresponding to combinations of a pattern code, which is a 4×4 2D code, and seven emission colors of LEDs 10 can be identified.

As described with reference to FIG. 7, by matching products to combinations in which pattern codes and/or emission colors of the LED 10 are different, a greater number of products can be assigned to electronic shelf labels than in a case where products are matched to only pattern codes.

Furthermore, by matching products to combinations in which pattern codes and/or emission patterns of the LED 10 are different, a greater number of products can be assigned to each electronic shelf label than when matching products to only the pattern code.

However, the present disclosure is not limited thereto, and unlike the method described with reference to FIG. 6 and FIG. 7, step S107 of the method S100 may be replaced with step S117 of FIG. 8.

Referring to FIG. 8, step S117 of obtaining product-related information may include step S1171 of obtaining location data of at least one product matching at least one pattern code based on the identified pattern code, and step S1172 of obtaining information on a user input with respect to at least one product provided at a location specified by the location data, which matches the emission color of at least one LED 10, based on the identified emission color.

In step S1171 of obtaining location data of at least one product, location data of at least one product assigned to at least one electronic shelf label 100 displaying at least one pattern code may be obtained based on the at least one pattern code identified in step S103.

For example, the first electronic shelf label EL1 may display a first pattern code C1, and the first pattern code C1 may be identified in step S103. The first pattern code C1 may be matched to location data that specifies the location of the first electronic shelf label EL1. Information in which the first pattern code C1 and the location data of the first electronic shelf label EL1 match each other may be stored in advance in the location information database 14. Therefore, the location data of the first electronic shelf label EL1 may be acquired from the location information database 14 based on the first pattern code C1 identified in step S103.

Additionally, the first product T1 assigned to the first electronic shelf label EL1 may be provided at the location where the first electronic shelf label EL1 is provided. In this case, the location of the first electronic shelf label EL1 and the location of the first product T1 may be substantially the same, and the location data of the first electronic shelf label EL1 matching the first pattern code C1 may be the location data of the first product T1. Accordingly, the location data of the first product T1 assigned to the first electronic shelf label EL1 may be acquired from the location information database 14 based on the result of identifying the first pattern code C1.

In step S1172 of obtaining information regarding user input, a user input for at least one product assigned to at least one electronic shelf label 100 may be identified based on the emission color of at least one LED 10 identified in step S105.

Here, the user input may be a user input for selecting the at least one product assigned to the at least one electronic shelf label 100. For example, the user may input an instruction for selecting at least one product assigned to at least one electronic shelf label 100 via a UI displayed on the input module 24 or the display module 25 of the computing device 400 or 500.

Furthermore, the user input may be a user input for purchasing the at least one product assigned to the at least one electronic shelf label 100. For example, the user may input an instruction for purchasing at least one product assigned to at least one electronic shelf label 100 via a UI displayed on the input module 24 or the display module 25 of the computing device 400 or 500. When the user input for purchasing at least one product is received via the computing device 400 or 500, payment for the product may be made simultaneously.

For example, a user input for the first product T1 assigned to the first electronic shelf label EL1 among the plurality of electronic shelf labels EL1, EL2, EL3, EL4, EL5, and EL6 displayed on the shelf 30 may be received by the computing device 400 or 500. Thereafter, the server 300 may control the first electronic shelf label EL1 to which the first product T1 is assigned such that the first LED L1 included in the first electronic shelf label EL1 emits light according to the user input. At the same time, the imaging device control module 17 of the server 300 may control the imaging device 200 to capture an image of the first electronic shelf label EL1 including the emitting first LED L1.

Specifically, a signal according to the user input for the first product T1 may be transmitted from the computing device 400 or 500 to the first electronic shelf label EL1 via the server 300, and the first LED L1 of the first electronic shelf label EL1 can emit light in response to this signal.

In this case, the emission color of the first LED L1 controlled to emit light in response to the signal based on the user input may be identified in step S105. By identifying the emission color of the first LED L1, information regarding the user input that causes the first LED L1 to emit light may be obtained.

For example, if the computing device 400 or 500 receives a first user input for selecting the first product assigned to the first electronic shelf label EL1 including the first LED L1, the first LED L1 of the first electronic shelf label EL1 may emit light in a first color (e.g., blue). As a result of identifying the first color, which is the emission color of the first LED L1, information indicating that the user has selected the first product located at the location specified by the location data obtained in step S1171 may be obtained as information regarding the first user input.

Furthermore, for example, if the computing device 400 or 500 receives a user input for purchasing the first product assigned to the first electronic shelf label EL1 including the first LED L1, the first LED L1 of the first electronic shelf label EL1 may emit light in a second color (e.g., red). As a result of identifying the second color, which is the emission color of the first LED L1, information indicating that the user has purchased the first product located at the location specified by the location data obtained in step S1171 may be obtained as information regarding the second user input.

In addition, the method S100 may further include a step of displaying information related to at least one product obtained in step S107 on a display module.

The processor 11 of the server 300 may control the system 1000 such that the information related to the at least one product obtained in step S105 is displayed on the display module of the at least one electronic shelf label 100 and/or the display module 25 of the computing device 400 or 500.

For example, the processor 11 of the server 300 may control the system 1000 such that information regarding the type of the at least one product matching the combination of at least one pattern code and the emission color of the at least one LED identified in steps S103 and S105 is displayed on the display module 25 of the at least one electronic shelf label 100 and/or the computing device 400 or 500.

Furthermore, for example, the processor 11 of the server 300 may control the system 1000 such that information regarding the user input obtained in step S1172 is displayed on the display module 25 of the at least one electronic shelf label 100 and/or the computing device 400 or 500.

FIG. 9 is a flowchart illustrating a method S200 of obtaining product-related information according to another embodiment.

Referring to FIG. 9, the method S200 of obtaining product-related information may include step S201 of obtaining a plurality of captured images of at least one electronic shelf label 100 captured multiple times by the imaging device 200, step S203 of identifying at least one pattern code displayed on the at least one electronic shelf label 100 from the captured images, step S205 of identifying at least one LED 10 included in the at least one electronic shelf label 100 from the captured images, and step S207 of obtaining information related to at least one product assigned to the at least one electronic shelf label 100 based on the identified pattern code, LED, and the number of times the LED has been identified.

In step S201 of obtaining a plurality of captured images, the processor 11 of the server 300 may control the imaging device 200 to capture an area where at least one electronic shelf label 100 and at least one product are provided on a shelf 30 multiple times, thereby acquiring a plurality of captured images.

For example, at least one LED 10 included in at least one electronic shelf label 100 may emit light multiple times in response to signals according to multiple user inputs. The processor 11 may acquire a captured image of the at least one electronic shelf label 100 captured by the imaging device 200 at each of points in time when the at least one LED 10 emits light multiple times.

For example, referring to FIG. 6, each of the plurality of captured images may include a plurality of electronic shelf labels EL1, EL2, EL3, EL4, EL5, and EL6 provided on a shelf 30 and a plurality of products T1, T2, T3, T4, T5, and T6 provided to correspond to the plurality of electronic shelf labels EL1, EL2, EL3, EL4, EL5, and EL6.

However, the present disclosure is not limited thereto, and each of the captured images may include some of the plurality of electronic shelf labels EL1, EL2, EL3, EL4, EL5, and EL6 provided on the shelf 30 and some of the plurality of products T1, T2, T3, T4, T5, and T6 provided to correspond to the plurality of electronic shelf labels EL1, EL2, EL3, EL4, EL5, and EL6.

For example, each captured image may include the first electronic shelf label EL1, the second electronic shelf label EL2, and the third electronic shelf label EL3 among the plurality of electronic shelf labels EL1, EL2, EL3, EL4, EL5, and EL6 and may include the first product T1, the second product T2, and the third product T3 among the plurality of products T1, T2, T3, T4, T5, and T6.

The imaging device 200 may transmit the acquired captured images to the server 300 and/or the computing device 400 or 500 via the network 600.

In step S203 of identifying at least one pattern code displayed on the at least one electronic shelf label 100, the pattern code identification module 19 of the server 300 may identify the type of at least one pattern code displayed by the at least one electronic shelf label 100 included in the captured images multiple times.

At each of points in time when the at least one LED 10 emits light multiple times, the pattern code identification module 19 may identify the type of at least one pattern code displayed by the at least one electronic shelf label 100 included in the captured images.

However, the present disclosure is not limited thereto, and after acquiring all of the plurality of captured images in step S201, the pattern code identification module 19 may sequentially identify the type of at least one pattern code displayed on at least one electronic shelf label 100 included in the captured images at points in time of capturing the plurality of captured images.

In this manner, the pattern code identification module 19 may identify at least one pattern code displayed on at least one electronic shelf label 100 multiple times in step S203.

The pattern code identification module 19 can identify at least one pattern code displayed on at least one electronic shelf label 100 from the captured images through image analysis. Here, at least one pattern code may be a 2D code.

Referring to FIG. 6, a plurality of captured images may include a plurality of pattern codes C1, C2, C3, C4, C5, and C6 displayed by a plurality of electronic shelf labels EL1, EL2, EL3, EL4, EL5, and EL6. The pattern code identification module 19 may identify at least some of the plurality of pattern codes C1, C2, C3, C4, C5, and C6 included in the captured images.

However, the present disclosure is not limited thereto, and at least one processor 21 of the computing devices 400 and 500 may perform the step of identifying at least some of the plurality of pattern codes C1, C2, C3, C4, C5, and C6.

In step S205 of identifying at least one LED 10 included in the at least one electronic shelf label 100, the LED identification module 18 of the server 300 may identify at least one LED 10 of the at least one electronic shelf label 100 included in the plurality of captured images multiple times.

For example, the LED identification module 18 may identify the emitting color of the LED 10 included in the at least one electronic shelf label 100. At each of points in time when the at least one LED 10 emits light multiple times, the LED identification module 18 may identify the emitting color of the at least one LED 10 included in the at least one electronic shelf label 100 included in the plurality of captured images.

However, the present disclosure is not limited thereto, and after acquiring all of the plurality of captured images in step S201, the LED emission color identification module 18 may sequentially identify the emission color of the at least one LED 10 included in the at least one electronic shelf label 100 included in the plurality of captured images at points in time of capturing the plurality of captured images.

In this manner, the LED emission color identification module 18 can identify the emission color of at least one LED 10 included in at least one electronic shelf label 100 multiple times in step S203.

The LED emission color identification module 18 may identify the emission color of at least one LED 10 included in at least one electronic shelf label 100 from the plurality of captured images using a color extraction algorithm. At least one LED 10 may emit various colors. For example, at least one LED 10 may emit seven colors of blue, red, green, yellow, sky blue, gray, and white. However, the present disclosure is not limited thereto, and the LED 10 may further emit various colors other than the seven colors listed above. Referring to FIG. 6, the captured images may include a plurality of LEDs L1, L2, L3, L4, L5, and L6 included in a plurality of electronic shelf labels EL1, EL2, EL3, EL4, EL5, and EL6. The LED emission color identification module 18 may identify the emission colors of at least some of the LEDs L1, L2, L3, L4, L5, and L6 included in the plurality of captured images.

For example, the LED emission color identification module 18 may identify the emission colors of some LEDs operating to emit light among the plurality of LEDs L1, L2, L3, L4, L5, and L6 included in the captured images.

However, the present disclosure is not limited thereto, and at least one processor 21 of the computing devices 400 and 500 may perform the step of identifying the emission colors of at least some of the plurality of LEDs L1, L2, L3, L4, L5, and L6.

In addition, for example, the LED identification module 18 may identify the emission pattern of the LED 10 included in at least one electronic shelf label 100 in step S205. Here, the emission pattern of the LED 10 may be an operation pattern of the LED 10 in which an emission time, a pause time, etc. are combined.

The result of pattern code identification by the pattern code identification module 19 in step S203 and the result of identification of the LED 10 by the LED identification module 18 in step S205 may be stored in the memory 12. In this case, the pattern code identification result and the result of the LED 10 at the same time for the same electronic shelf label 100 may be matched and stored in the memory 12.

For example, the first pattern code C1 displayed by the first electronic shelf label EL1 at a first point in time and the emission color of the first LED L1 included in the first electronic shelf label EL1 at the first point in time may be matched and stored in the memory 12. In addition, the first pattern code C1 displayed by the first electronic shelf label EL1 at a second point in time that is different from the first point in time and the emission color of the first LED L1 included in the first electronic shelf label EL1 at the second point in time may be matched and stored in the memory 12.

In step S207 of obtaining product-related information, the processor 11 of the server 300 may obtain information related to at least one product assigned to the at least one electronic shelf label 100 based on a combination of the at least one pattern code identified in step S203 and the at least one LED 10 identified in step S205, and the number of times the at least one LED 10 is identified.

For example, the processor 11 may identify the type of at least one product assigned to the at least one electronic shelf label 100 based on the combination of the at least one pattern code identified in step S203 and the emission color of the at least one LED 10 identified in step S205.

Specifically, the processor 11 may identify the type of at least one product that matches a combination of at least one pattern code and the emission color of at least one LED 10 identified at the first point in time when the first captured image among the plurality of captured images is acquired.

Additionally, the processor 11 may identify the type of at least one product that matches a combination of at least one pattern code and the emission color of at least one LED 10 identified at the second point in time when the second captured image, different from the first captured image, among the plurality of captured images is obtained.

Information regarding the type of a product may be matched to a combination of at least one pattern code and the emission color of at least one LED and stored in the product information database (not shown). The product information database may be included in the server 300 or implemented as a separate device from the server 300.

Information regarding different types of products may be matched to combinations in which pattern codes and/or emission colors of the LED 10 are different and stored in the product information database. The processor 11 may obtain information regarding the type of at least one product corresponding to a combination of the identification results of steps S203 and S205 by comparing the combination of the identification results of steps S203 and S205 with a combination of at least one pattern code and the emission color of at least one LED 10 from the product information database.

Furthermore, information regarding at least one product may be obtained based on the number of times the emission color of at least one LED 10 is identified in step S207. Specifically, information on the number of times the type of at least one product matching the combination of the identified at least one pattern code and at least one LED 10 may be obtained in step S207.

For example, in step S207, the number of times the emission color of the first LED L1 of the first electronic shelf label EL1 is identified may be counted, thereby obtaining information on the number of times the type of a product matching a combination of the first pattern code C1 displayed by the first electronic shelf label EL1 and the emission color of the first LED L1 is identified.

Furthermore, in step S207, the number of times the emission color of the second LED L2 of the second electronic shelf label EL2 is identified may be counted, thereby obtaining information on the number of times the type of a product matching a combination of the second pattern code C2 displayed by the second electronic shelf label EL2 and the emission color of the second LED L2 is identified.

However, the present disclosure is not limited thereto, and unlike the method described with reference to FIG. 9 and FIG. 6, step S207 of the method S200 may be replaced with step S217 of FIG. 10.

Referring to FIG. 10, step S217 of obtaining product-related information may include step S2171 of obtaining location data of at least one product matching at least one pattern code multiple times based on pattern codes identified multiple times, and step S2172 of obtaining information regarding a user input with respect to at least one product provided at a location specified by the location data, which matches the emission color of at least one LED 10 based on emission colors identified multiple times.

In step S2171 of obtaining location data of at least one product, location data of at least one product assigned to at least one electronic shelf label 100 displaying at least one pattern code may be obtained multiple times, based on the at least one pattern code identified multiple times in step S203.

For example, in step S203, the type of at least one pattern code displayed by at least one electronic shelf label 100 included in the captured images may be identified at each of points in time when the at least one LED 10 emits light multiple times.

Each of the identified at least one pattern code may be matched to location data specifying the location of at least one electronic shelf label 100. At least one product assigned to at least one electronic shelf label 100 may be provided at the location where the at least one electronic shelf label 100 is provided. In this case, the location of the at least one electronic shelf label 100 and the location of the at least one product can be substantially the same.

Therefore, based on the result of identifying at least one pattern code, the location of the at least one electronic shelf label 100 and location data of the at least one product may be obtained from the location information database 14.

For example, location data of the first product T1 assigned to the first electronic shelf label EL1 can be obtained based on the result of identifying the first pattern code C1 identified at the first point in time. Furthermore, location data of the first product T1 assigned to the first electronic shelf label EL1 can be obtained based on the result of identifying the first pattern code C1 identified at the second point in time, which is different from the first point in time.

Furthermore, location data of the second product T2 assigned to the second electronic shelf label EL2 can be obtained based on the result of identifying the second pattern code C2 identified at the first point in time. Furthermore, location data of the second product T2 assigned to the second electronic shelf label EL2 can be obtained based on the result of identifying the second pattern code C2 identified at the second point in time.

In step S2172 of obtaining information regarding a user input, a user input for at least one product assigned to at least one electronic shelf label 100 may be identified multiple times based on the emission color of at least one LED 10 identified multiple times in step S205.

For example, a first user input for the first product T1 may be received by the computing device 400 or 500 at the first point in time, and the first user input for the first product T1 may be received by the computing device 400 or 500 at the second point in time different from the first point in time. Here, the first user input may be a user input for selecting the first product T1.

A first signal according to the first user input at the first point in time for the first product T1 may be transmitted from the computing device 400 or 500 to the first electronic shelf label EL1 via the server 300, and the first LED L1 of the first electronic shelf label EL1 can emit light in response to the first signal. In addition, a second signal according to the first user input at the second point in time for the first product T1 may be transmitted from the computing device 400 or 500 to the first electronic shelf label EL1 via the server 300, and the first LED L1 of the first electronic shelf label EL1 may emit light in response to the second signal.

Information about the first user input at the first point in time may be obtained by identifying the emission color of the first LED L1 according to the first signal by the first user input at the first point in time, and information about the first user input at the second point in time may be obtained by identifying the emission color of the first LED L1 according to the second signal by the first user input at the second point in time.

Alternatively, a second user input different from the first user input for the first product T1 may be received by the computing device 400 or 500 at the first point in time, and the second user input for the first product T1 may be received by the computing device 400 or 500 at the second point in time. Here, the second user input may be a user input for purchasing the first product T1.

A first signal according to the second user input at the first point in time for the first product T1 may be transmitted from the computing device 400 or 500 to the first electronic shelf label EL1 via the server 300, and the first LED L1 of the first electronic shelf label EL1 can emit light in response to the first signal. In addition, a second signal according to the second user input at the second point in time for the first product T1 may be transmitted from the computing device 400 or 500 to the first electronic shelf label EL1 via the server 300, and the first LED L1 of the first electronic shelf label EL1 can emit light in response to the second signal.

By identifying the emission color of the first LED L1 according to the first signal by the second user input at the first point in time, information about the second user input at the first point in time can be obtained, and by identifying the emission color of the first LED L1 according to the second signal by the second user input at the second point in time, information about the second user input at the second point in time can be obtained.

In this way, by identifying the emission color of at least one LED 10 multiple times in step S207, information about the type of a user input that causes the at least one LED 10 to emit light and the number of times the user input is input to the computing device 400 or 500 can be obtained.

Furthermore, the method S200 may further include a step of displaying the information related to the at least one product obtained in step S207 on a display module.

The processor 11 of the server 300 may control the system 1000 such that the information related to the at least one product obtained in step S207 is displayed on the display module of the at least one electronic shelf label 100 and/or the display module 25 of the computing device 400 or 500.

FIG. 11 is a flowchart illustrating a method S300 of obtaining product-related information according to another embodiment.

Referring to FIG. 11 and FIG. 12, the method S300 of obtaining product-related information may include step S301 of obtaining a captured image of at least one electronic shelf label 100 captured by the imaging device 200, step S303 of identifying at least one pattern code displayed on the at least one electronic shelf label 100 from the captured image, step S305 of identifying at least one LED 10 included in the at least one electronic shelf label 100 from the captured image, step S307 of obtaining information related to at least one product assigned to the at least one electronic shelf label 100 based on a combination of the identified at least one pattern code and at least one LED 10, step S309 of obtaining location data of the at least one product based on the information related to the at least one product, step S311 of detecting target images TI1 and TI2 which are images of an area corresponding to the location data of the at least one product in the captured image, step S313 of detecting a reference image RI which is an image of the area corresponding to the location data of the at least one product in a planogram, and step S315 of comparing the target images TI1 and TI2 with the reference image RI.

In addition, the method S300 of obtaining product-related information may further include step S317 of displaying information regarding the display state of the at least one product on a display module when the target images TI1 and TI2 are determined to be different from the reference image RI.

Steps S301, S303, S305, and S307 included in the method S300 are substantially the same as steps S101, S103, S105, and S107 included in the method S100, and therefore, description of steps S301, S303, S305, and S307 will be omitted.

In step S309 of obtaining location data of the product, location data of the at least one product may be obtained from the product-related information obtained in step S307.

Location data of the at least one product assigned to the at least one electronic shelf label 100 displaying the at least one pattern code may be obtained based on the at least one pattern code identified in step S303.

Specifically, at least one pattern code displayed by at least one electronic shelf label 100 may be matched to location data of the at least one electronic shelf label 100. At least one product assigned to at least one electronic shelf label 100 may be provided at the location where the at least one electronic shelf label 100 is provided. The location of at least one electronic shelf label 100 may be substantially the same as the location of at least one product assigned to the at least one electronic shelf label 100. Therefore, location data of at least one product can be acquired by identifying at least one pattern code.

However, the present disclosure is not limited thereto, and location data of at least one product assigned to the at least one electronic shelf label 100 displaying the at least one pattern code can be acquired based on a combination of the at least one pattern code identified in step S303 and the at least one LED 10 identified in step S305.

Specifically, a combination of at least one pattern code displayed by at least one electronic shelf label 100 and the LED 10 of the electronic shelf label may be matched to the location data of the electronic shelf label. Therefore, location data of the product assigned to the electronic shelf label can be acquired through the combination of at least one identified pattern code and at least one identified LED 10.

In step S311 of detecting target images TI1 and TI2, the processor 11 of the server 300 may detect the target images TI1 and TI2 from the captured image based on the location data of the product obtained in step S309. The target images TI1 and TI2 may be images of an area corresponding to the location data obtained in step S309.

For example, referring to FIG. 12, the processor 11 may detect the first target image TI1, which is an image of an area corresponding to the location data of the first pattern code C1, from the captured image. In this case, the first target image TI1 may include the first electronic shelf label EL1 displaying the first pattern code C1 and a target product T1 provided in an area corresponding to the location data of the first pattern code C1.

However, the present disclosure is not limited thereto, and the processor 21 of the computing device 400 or 500 may detect the target images TI1 and TI2 based on location data of the identified pattern codes C1, C2, C3, C4, C5, and C6 obtained in step S309.

In step S313 of detecting the reference image RI, the processor 11 of the server 300 may detect the reference image RI from a planogram stored in a planogram database (not shown) based on the location data obtained in step S309. The planogram database may be included in the server 300 or implemented as a separate device from the server 300.

For example, referring to FIG. 13, a planogram may include a display of a plurality of electronic shelf labels EL1, E21, EL3, EL4, EL5, and EL6 on a shelf 30 and a plurality of products P1, P2, P3, P4, P5, and P6 arranged to correspond to the plurality of electronic shelf labels EL1, E21, EL3, EL4, EL5, and EL6. Here, each of the plurality of products P1, P2, P3, P4, P5, and P6 is a product assigned to each of the plurality of electronic shelf labels EL1, E21, EL3, EL4, EL5, and EL6. Additionally, in the planogram, the plurality of electronic shelf labels EL1, E21, EL3, EL4, EL5, and EL6 may display a plurality of pattern codes C1, C2, C3, C4, C5, and C6.

The reference image RI is an image that serves as a comparison target for the target images TI1 and TI2, and may be an image of an area corresponding to the location data that serves as the basis for detecting the target images TI1 and TI2 in the planogram. The products P1, P2, P3, P4, P5, and P6 assigned to the plurality of electronic shelf labels EL1, E21, EL3, EL4, EL5, and EL6 may be referred to as reference products.

For example, referring to FIG. 13, the processor 11 may detect a reference image RI that includes the first electronic shelf label EL1 and the reference product P1 assigned to the first electronic shelf label EL1 as an image of an area corresponding to the location data that serves as the basis for detecting the first target image TI1.

However, the present disclosure is not limited thereto, and the processor 21 of the computing device 400 or 500 may detect the reference image RI from a planogram stored in the planogram database based on the location data of the product obtained in step S309.

In step S315 of comparing the target images TI1 and TI2 with the reference image RI, the processor 11 of the server 300 may compare the target images TI1 and TI2 with the reference image RI.

For example, the processor 11 may compare the first target image TI1 with the reference image RI. Here, the first target image TI1 and the reference image RI, which are comparison targets, may include the same first electronic shelf label EL1.

Based on the result of comparison between the first target image TI1 and the reference image RI, the processor 11 may determine whether the target product T1 included in the first target image TI1 is identical to the reference product P1 included in the reference image RI.

However, the present disclosure is not limited thereto, and the processor 21 of the computing device 400 or 500 may compare the target images TI1 and TI2 with the reference image RI.

In step S317 of displaying information on a display state of at least one product on the display module, if the processor 11 of the server 300 determines in step S315 that the first target image TI1 is different from the reference image RI, the processor 11 may control the system 1000 such that information on the display state of the target product T1 actually displayed on the shelf 30 is displayed on the display module of at least one electronic shelf label 100 and/or the display module 25 of the computing device 400 or 500.

For example, referring to FIG. 12 and FIG. 13, the target product T1 included in the first target image TI1 and the reference product P1 included in the reference image RI1 may be determined to be different from each other. Specifically, the reference product P1 assigned to the first electronic shelf label EL1 needs to be displayed in an area corresponding to the location data of the first electronic shelf label EL1, but a customer or on-site staff places the target product T1 different from the reference product P1 in the area corresponding to the location data of the first electronic shelf label EL1, and thus misplacement of products may occur.

In this way, if the processor 11 of the server 300 determines in step S315 that the type of the target product T1 included in the first target image TI1 is different from the type of the reference product P1 included in the reference image RI, the processor 11 may transmit a product misplacement alarm for the area corresponding to the location data assigned to the first pattern code C1 of the first electronic shelf label EL1 to the computing device 400 or 500.

Referring to FIG. 14, the product misplacement alarm may be displayed on the computing device 400 or 500. For example, information indicating a location at which a specific product is misplaced may be displayed on the computing device 400 or 500. However, the present disclosure is not limited thereto, and the method of displaying the misplacement alarm on the computing device 400 or 500 may be modified in various manners.

However, the present disclosure is not limited thereto, and if the processor 21 of the computing device 400 or 500 determines in step S315 that the first target image TI1 is different from the reference image RI, information regarding the display state of the target product T1 actually displayed on the shelf 30 may be displayed on the computing device 400 or 500.

Furthermore, in step S317, the processor 11 of the server 300 may detect, from the planogram database, a target matching image TMI that includes an image of a target matching product P6 identical to the target product T1 determined to be different from the reference product P1.

For example, referring to FIG. 12 and FIG. 13, the processor 11 may detect the target matching image TMI that includes an image of the target matching product P6 identical to the target product T1 determined to be different from the reference product P1 from the planogram through image analysis. The target matching image TMI may include a target matching electronic shelf label EL6 to which the target matching product P6 is assigned.

The processor 11 may provide location data assigned to the pattern code C6 of the target matching electronic shelf label EL6 to which the target matching product P6 is assigned to the computing device 400 or 500. Accordingly, a user using the computing device 400 or 500 can obtain information indicating a location where a misplaced product should have been originally displayed.

However, the present disclosure is not limited thereto, and the processor 21 of the computing device 400 or 500 may detect the target matching image TMI, which is an image including the target matching product P6 that is identical to the target product T1 determined to be different from the reference product P1, from the planogram database, and display the location data assigned to the pattern code C6 of the target matching electronic shelf label EL6 included in the target matching image TMI on the computing device 400 or 500.

In addition, in step S317, if the processor 11 of the server 300 determines that the target image TI2 does not include any product, including the reference product P1, the processor 11 may transmit a reference product out-of-stock alarm for the area corresponding to the location data assigned to the pattern code to the computing device 400 or 500.

For example, referring to FIG. 15, the processor 11 may detect a second target image TI2 that does not include any product as an image of an area corresponding to the location data of the first pattern code C1 from the captured image.

If the processor 11 determines that the second target image TI2 does not include any product, including the reference product P1, the processor 11 may transmit a reference product out-of-stock alarm for the area corresponding to the location data assigned to the first pattern code C1 of the first electronic shelf label EL1 included in the second target image TI2 to the computing device 400 or 500. Accordingly, the user using the computing device 400 or 500 can obtain information indicating that the product assigned to the first electronic shelf label EL1 is out of stock.

For example, referring to FIG. 16, the product out-of-stock alarm may be displayed on the computing device 400 or 500. For example, information regarding whether a specific product at a particular location is out of stock may be displayed on the computing device 400 or 500. However, the present disclosure is not limited thereto, and the method of displaying the product out-of-stock alarm on the computing device 400 or 500 may be modified in various manners.

However, the present disclosure is not limited thereto, and if the processor 21 of the computing device 400 or 500 determines that the second target image TI2 does not include any products, including the reference product P1, a product out-of-stock alarm for the area corresponding to the location data assigned to the pattern code C1 may be displayed on the computing device 400 or 500.

The embodiments of the present disclosure described above may be implemented in the form of program instructions executable by various computer components and recorded on a computer-readable recording medium. The computer-readable recording medium may include program instructions, data files, data structures, and the like, either singly or in combination. The program instructions recorded on the computer-readable recording medium may be specifically designed and configured for the present disclosure or may be known and usable by those skilled in the art of computer software. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROMs, RAMs, and flash memories. Examples of program instructions include not only machine language codes such as those generated by a compiler, but also high-level language codes that can be executed by a computer using an interpreter or the like. Hardware devices may be modified to one or more software modules to perform processing according to the present disclosure, and vice versa.

The specific implementations described herein are exemplary embodiments and do not limit the scope of the present disclosure in any way. For the sake of brevity, descriptions of conventional electronic components, control systems, software, and other functional aspects of the systems may be omitted. Furthermore, the lines or connecting elements between components depicted in the drawings are merely illustrative of functional connections and/or physical or circuit connections. In actual devices, these connections may be replaced or represented as various additional functional, physical, or circuit connections. Furthermore, unless specifically stated as "essential," "important," or the like, a component may not be absolutely necessary for the application of the present disclosure.

Although the detailed description of the present disclosure has been made with reference to preferred embodiments of the present disclosure, it will be understood by those skilled in the art or those with ordinary knowledge in the art that various modifications and variations can be made to the present disclosure without departing from the spirit and scope of the present disclosure as set forth in the claims. Therefore, the technical scope of the present disclosure should not be limited to the details set forth in the detailed description of the specification, but should be defined by the scope of the claims.

### [Industrial Applicability]

The present disclosure has industrial applicability in that it provides a system that can more efficiently obtain information on countless products displayed on shelves in a store by assigning product-related information to various combinations of unique pattern codes displayed by electronic shelf labels and colors of LEDs of the electronic shelf labels, and obtaining product-related information through identification of combinations of pattern codes and LED colors.

## Claims

1. A method of obtaining product-related information, comprising:
obtaining a captured image of at least one electronic shelf label captured by an imaging device;
identifying at least one pattern code displayed on the at least one electronic shelf label from the captured image;
identifying at least one LED included in the at least one electronic shelf label from the captured image; and
obtaining information related to at least one product assigned to the at least one electronic shelf label based on a combination of the identified at least one pattern code and the at least one LED.

2. The method obtaining product-related information according to claim 1, wherein the identifying at least one LED comprises identifying a color emitted from the at least one LED.

3. The method obtaining product-related information according to claim 2, wherein the identifying information related to at least one product comprises identifying a type of the at least one product matching the combination of the at least one pattern code and the color emitted from the at least one LED.

4. The method of obtaining product-related information according to claim 2, wherein the obtaining information related to at least one product comprises:
obtaining location data of the at least one product matching the at least one pattern code based on the identified pattern code; and
obtaining information regarding a user input with respect to the at least one product located at a location specified by the location data, which matches the color emitted from the at least one LED based on the identified color.

5. The method of obtaining product-related information according to claim 4, wherein the obtaining a captured image comprises obtaining a plurality of captured images of the at least one electronic shelf label captured by the imaging device multiple times each time the at least one LED repeatedly emits light in response to signals according to a plurality of user inputs,
wherein the identifying at least one pattern code displayed on the at least one electronic shelf label comprises identifying at least one pattern code displayed on the at least one electronic shelf label multiple times from the plurality of captured images,
the identifying a color emitted from at least one LED included in the at least one electronic shelf label comprises identifying the color emitted from the at least one LED multiple times from the plurality of captured images, and
the obtaining information regarding a user input comprises obtaining the information regarding the user input based on the number of times the color emitted from the at least one LED has been identified.

6. The method of obtaining product-related information according to claim 4, further comprising displaying the information regarding the user input on a display module.

7. The method of obtaining product-related information according to claim 4, wherein the user input is a user input for selecting the at least one product assigned to the at least one electronic shelf label, or a user input for purchasing the at least one product assigned to the at least one electronic shelf label.

8. The method of obtaining product-related information according to claim 4, wherein the obtaining information related to the at least one product comprises:
obtaining information regarding a first user input with respect to the at least one product provided at a location specified by the location data, which matches a first color, in a case where the color emitted from the identified at least one LED is the first color; and
obtaining information regarding a second user input with respect to the at least one product provided at the location specified by the location data, which matches a second color, in a case where the color emitted from the identified at least one LED is the second color.

9. The method of obtaining product-related information according to claim 1, wherein the obtaining a captured image comprises obtaining the captured image by the imaging device capturing an image of an area in which the at least one electronic shelf label and the at least one product assigned to the at least one electronic shelf label are provided.

10. The method of obtaining product-related information according to claim 9, further comprising:
obtaining location data of the at least one product based on the information related to the at least one product;
detecting a target image, which is an image of an area corresponding to the location data of the at least one product, from the captured image;
detecting a reference image, which is an image of an area corresponding to the location data of the at least one product, from a planogram; and
comparing the target image with the reference image.

11. The method of obtaining product-related information according to claim 10, further comprising displaying information regarding a display state of the at least one product on a display module in a case where the target image is determined to be different from the reference image in the comparing the target image with the reference image.

12. The method of obtaining product-related information according to claim 1, further comprising receiving a user input with respect to the at least one product from a user.

13. The method of obtaining product-related information according to claim 12, further comprising controlling the at least one electronic shelf label such that an LED corresponding to the user input emits light.

14. The method of obtaining product-related information according to claim 12, further comprising controlling the at least one electronic shelf label such that the at least one electronic shelf label displays the at least one pattern code corresponding to the user input.

15. A system for obtaining product-related information, comprising:
at least one electronic shelf label including an LED;
an imaging device; and
a computing device including a processor configured to perform a method of obtaining information related to at least one product assigned to the at least one electronic shelf label based on a captured image of the at least one electronic shelf label captured by the imaging device,
wherein the method of obtaining information related to the product comprises:
obtaining a captured image of the at least one electronic shelf label captured by the imaging device;
identifying at least one pattern code displayed on the at least one electronic shelf label from the captured image;
identifying at least one LED included in the at least one electronic shelf label from the captured image; and
obtaining information related to at least one product assigned to the at least one electronic shelf label based on a combination of the identified at least one pattern code and the at least one LED.
